(19)

**Europäisches Patentamt**

**European Patent Office**

**Office européen des brevets**

(11)  **EP 2 549 788 B1**

(12)  **EUROPEAN PATENT SPECIFICATION**

(45) Date of publication and mention
of the grant of the patent:
**12.10.2016  Bulletin 2016/41**

(51) Int Cl.:
**H04W 16/12** *(2009.01)*     **H04W 40/24** *(2009.01)*

(21) Application number: **11290335.6**

(22) Date of filing: **22.07.2011**

(54) **A method for managing single channel spatial reuse in the presence of potentially disruptive nodes in a mobile ad-hoc network**

Verfahren zur Verwaltung Einkanaliger Raumwiederverwendung in Gegenwart von potentiellen Störknoten in einem mobilen Ad-hoc-Netz

Procédé de gestion de la réutilisation spatiale sur canal unique en présence de noeuds potentiellement perturbateurs dans un réseau mobile ad hoc

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.01.2013  Bulletin 2013/04**

(73) Proprietors:
- **THALES**
  **92400 Courbevoie (FR)**
- **Indra**
  **28300 Aranjuez Madrid (ES)**
- **Elektrobit Wireless Communications Ltd.**
  **90590 Oulu (FI)**
- **SELEX ELSAG S.P.A.**
  **67100 L'Aquilla (IT)**
- **Saab**
  **175 88 Järfälla (SE)**
- **Radmor**
  **Gdynia (PL)**

(72) Inventors:
- **Joly, Antoine**
  **92704 Colombes Cedex (FR)**
- **Fachau, Laurent**
  **92704 Colombes Cedex (FR)**

(74) Representative: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) References cited:
- **LIPING ZHOU ET AL: "A hybrid MAC protocol based on ADAPT with modified back-off mechanism", EDUCATION TECHNOLOGY AND COMPUTER (ICETC), 2010 2ND INTERNATIONAL CONFERENCE ON, IEEE, PISCATAWAY, NJ, USA, 22 June 2010 (2010-06-22), pages V4-143, XP031718408, ISBN: 978-1-4244-6367-1**
- **BLOUGH D M ET AL: "The k-Neighbors Approach to Interference Bounded and Symmetric Topology Control in Ad Hoc Networks", IEEE TRANSACTIONS ON MOBILE COMPUTING, IEEE SERVICE CENTER, LOS ALAMITOS, CA, US, vol. 5, no. 9, 1 September 2006 (2006-09-01), pages 1267-1280, XP001546033, ISSN: 1536-1233, DOI: 10.1109/TMC.2006.139 [retrieved on 2006-07-17]**
- **QIONG SUN ET AL: "A Framework for Topology-Transparent Scheduling in Wireless Networks", 2010 IEEE VEHICULAR TECHNOLOGY CONFERENCE (VTC 2010-SPRING) - 16-19 MAY 2010 - TAIPEI, TAIWAN, IEEE, US, 16 May 2010 (2010-05-16), pages 1-5, XP031696411, ISBN: 978-1-4244-2518-1**
- **SHASHI PRABH K ET AL: "On Scheduling and Real-Time Capacity of Hexagonal Wireless Sensor Networks", REAL-TIME SYSTEMS, 2007. ECRTS '07. 19TH EUROMICRO CONFERENCE ON, IEEE, PI, 1 July 2007 (2007-07-01), pages 136-145, XP031115427, ISBN: 978-0-7695-2914-1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the invention

The invention relates to a method for managing spatial reuse on a single channel in a mobile ad-hoc network comprising one or more potentially disruptive nodes.

A potentially disruptive node or PDN is defined as a node having a wide connectivity as explained below.

### Discussion of prior art

A mobile network, for example a MANET (Mobile Ad-hoc Network), is a kind of network that has the capability to reconfigure itself and change locations. Such network is composed of a plurality of moving communication nodes able to emit (transmit) and to receive data from each other. The term data means signalling or user traffic or any kind of traffic or data exchanged between the nodes.

In some cases, a mobile network uses a single radio channel, and data communications are usually transmitted in time slots, a time slot being defined by its transmission time and its duration.

A time slot used by a given node to transmit on a given radio channel can be reused in transmission on the same radio channel by other nodes if they are far away enough. Thus there is no interference.

Some nodes in a mobile network, known as potentially disruptive nodes, may have a negative impact on performances because of their wide connectivity compared to the one of the network average. This is notably due to good propagation conditions and/or a favourable location of the node among other nodes of the network.

One of the problems with such nodes is that they can reduce the amount of slot spatial reuse in a mobile network. Moreover, PDN nodes can become routing bottlenecks if they have to relay too much data. A definition of a PDN node is given in the application EP10290677.3.

The document entitled "A hybrid MAC Protocol Based on ADAPT with Modified Bak-Off Mechanism" of Liping Zhou and al, education technology and computer 2010 2ND International conference, IEEE, Piscataway, NJ, USA, 22 june 2010, pages V4-413, XP031718408 allows to solve a problem of lack of radio resources created by PDN nodes.

### Definition

Slot spatial reuse consists in reusing the same slot in transmission on the same channel by several nodes if they are far away enough and thus do not interfere. Invention may also be applied in case of frequency hopping channel.

The channel $C_0$ is used by all the nodes of the network to transmit in S-SLOTs.

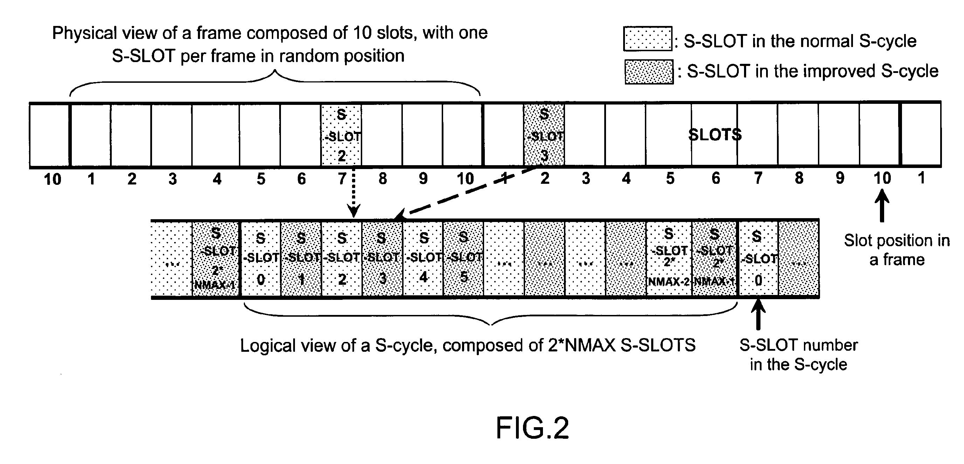

S-SLOTs are used, for example, to transmit signalling or user traffic or any kind of traffic or data exchanged between the nodes. A data frame may also comprise other types of slots than S-SLOTs. S-SLOTs may have a fixed position or a random position inside a data frame. A S-cycle is composed of a given number of data frames as explained after in connexion with figure 2.

### Summary of the invention

Present invention concerns a method for managing the spatial reuse of slots in a mobile network comprising several nodes Ni, said method comprising a S-cycle comprising first sub-cycle and a second sub-cycle, said network comprising one or more Potentially Disruptive Nodes (PDN), said PDN node having a wide connectivity compared to the one of the mobile network average, said nodes Ni and PDN comprising a local table LT, a global table GT indicating the possible reusability of S-SLOTs, S-SLOTs being defined as a slot adapted to transmit signalling or user traffic exchanged between the nodes, and a summary of the global table SGT adapted to determine which S-SLOTs in the improved S-cycle can finally be reused by the local node, said method comprising the interleaving of said two sub-cycles:

- first sub-cycle, the normal S-cycle, where S-SLOTs are all assigned statically and where each node has one and only one S-SLOT allocation,
- second sub-cycle, the improved S-cycle, where each node has one S-SLOT assigned statically, and where for all nodes except PDN nodes, one or more additional S-SLOTs is assigned dynamically when topology makes it possible, dynamic S-SLOT allocations being equitably shared in a 2-hop neighbourhood, and wherein the dynamic S-SLOT allocations are determined by performing S-SLOT spatial reuse,
- a counter of back-off counter used to avoid that the local node tries to reuse at the next S-cycle or at the same time as a 1-hop neighbour, a S-SLOT that just suffered a conflict or a jamming.

If two or more 1-hop neighbours announce their intentions to transmit in the same S-SLOT j, i.e status BUSY_TX for S-SLOT j, the local node may detect in advance a logical collision in S-SLOT j. To prevent a physical collision to occur in S-SLOT j, the local node indicates, for example, in its local table LT that S-SLOT j is JAMMED_OR_IN_COLLISION.

Each local node can update its local table LT if it logically detects the resolution of a logical collision, in order to stop transmitting a JAMMED_OR_IN_COLLISION status:

- If a logical collision has been detected on S-SLOT j less than one S-cycle ago, the local node should check the following conditions:

o Among the 1-hop neighbours involved in the logical collision, if only one of them indicates in its local table a BUSY_TX status for S-SLOT j, the status of S-SLOT j should be set to BUSY_RX in the local table LT of the local node,
o Among the 1-hop neighbours involved in the logical collision, if zero of them indicate in its local table LT the BUSY_TX status for S-SLOT j, the status of S-SLOT j should be set to FREE in the local table of the local node,
o A non-PDN node transmits its current local table LT in each of its static S-SLOT allocations, and potentially in each of its dynamic slot allocations, if better interactivity and convergence times are desired.

As soon as a node has identified itself as a PDN node, for example, it stops transmitting its local table and release its potential dynamic S-SLOT allocations. A PDN node continues updating its local table LT, its global table GT and its summary of the local table SGT.

According to an embodiment, a non-PDN node transmits its current table in each of its static S-SLOT allocations, and if needed in each of its potential dynamic S-SLOT allocations in order to improve convergence times.

According to another embodiment, a S-SLOT can have one of the four possible statuses in the improved S-cycle:

- BUSY_TX: The local node transmits in the S-SLOT;
- FREE: The local node does not transmit in the S-SLOT and it does not detect enough activity in the S-SLOT;
- BUSY_RX: The local node receives data properly, or it detects some activity in the S-SLOT even though it is not able to decode data properly;
- JAMMED_OR_IN_COLLISION: The S-SLOT is jammed by an enemy or suffers collisions from the network itself.

The dynamic S-SLOT allocations mechanisms use, for example, among other variables, the number of 2-hop neighbours of the local node, in order to calculate the theoretical maximum number of dynamic S-SLOT allocations the local node can have. If the number of 2-hop neighbours is zero, the node tries to reuse all the dynamic S-SLOTs of the improved S-cycle.

The steps to build a local table of a local node are, for example, the following steps:

- analysis of a local table transmitted by its 1-hop neighbours and received by the local node,
- logical detection of a collision,
- logical detection of a resolution of a logical collision,
- physical detection of the FREE, BUSY_RX or JAMMED_OR_IN_COLLISION status,
- BUSY_RX status for the static S-SLOT allocations of 1-hop neighbours.

The global table, which indicates the possible reusability of S-SLOTs in the improved S-cycle, is built, for example, by analyzing the local tables received from each 1-hop neighbour of the local node in the following way:

Let i represent the identity id of a 1-hop neighbour from which the local node has received a local table,
Let j designate the S-SLOT number in the improved S-cycle; GT(i,j) can either be equal to 0 or 1,
GT(i,j)=0 means that S-SLOT j is potentially reusable by the local node, according to the local table transmitted by node i,
GT(i,j)=1 means that S-SLOT j is not reusable by the local node, according to the local table transmitted by node i,
If the local table received from a 1-hop neighbour i indicates that S-SLOT j is FREE, then GT(i,j)=0,
If the local table received from a 1-hop neighbour i indicates that S-SLOT j is BUSY_RX, BUSY_TX or JAMMED_OR_IN_COLLISION, then GT(i,j)=1.

According to an embodiment, to determine which S-SLOTs in the improved S-cycle can finally be reused by the local node, said process comprises the analysis of the global table:

Let i represent the id of a 1-hop neighbour from which the local node has received a local table. Let j designate the S-SLOT number in the improved S-cycle.

Let $SGT(j) = \sum_i GT(i,j)$ with GT(i,j) can either be equal to 0 or 1,

A reusable S-SLOT verifies the three following criteria:

- LT(j)=FREE,
- SGT(j)=0.
- A back-off counter for S-SLOT j is, for example, equal to 0, back-off counter being a random integer between 0 and a given number.

The present invention concerns also a network for managing reuse in single channel condition in a mobile network comprising several nodes Ni, said network comprising one or several Potentially Disruptive Nodes (PDN), said PDN node having a wide connectivity compared to the one of the mobile network average, said nodes Ni and PDN comprising a local table LT, a global table GT and a summary of the global table SGT, a back-off counter adapted to avoid that the local node tries to reuse, at the next S-cycle or at the same time as a 1-hop neighbour, a S-SLOT that just suffered a conflict or a jamming, S-SLOTs being defined as a slot adapted to transmit signalling or user traffic exchanged between the nodes, wherein the nodes of the network comprises means for executing at least the steps of method according to characteristics previously mentioned.

## Brief description of the drawings

Other objects, features and advantages of the present invention will become apparent from the detailed description of the invention which follows, when considered in light of the accompanying drawings in which:

- Figure 1, is a schematic representation of a mobile ad-hoc network,
- Figure 2, is an example of normal and improved S-cycles,
- Figure 3, is an example of local table,
- Figure 4, is an example of a global table,
- Figure 5, is an example of summary of a global table, and
- Figure 6, is a diagram used to determine the new status of a S-SLOT in the local table of a local node, after the local node has received a local table transmitted by another node.

## Description of one embodiment

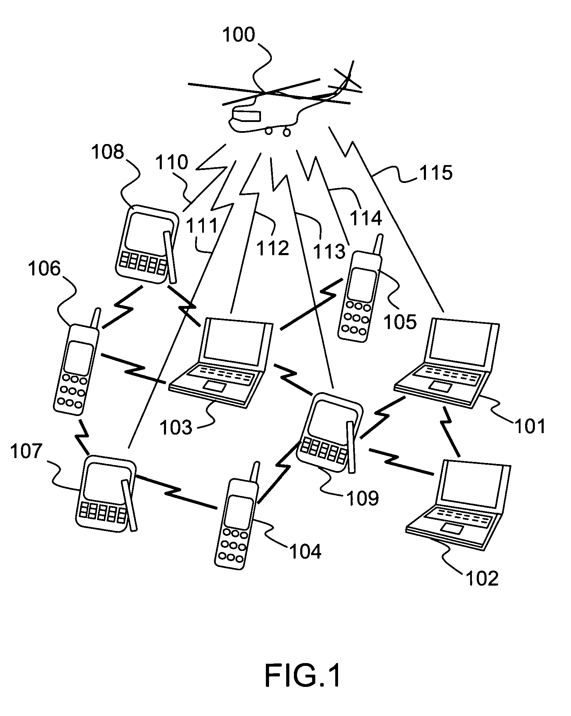

Figure 1 is a schematic representation of a mobile ad-hoc network comprising several radio communication nodes Ni. Some of them are potentially disruptive nodes (PDN) such as defined above.

The radio communication nodes are, for example, mobile phones 104, 105, 106, portable computers 101, 102, 103, electronic tablets 107, 108, 109, or aerial vehicle 100. More generally, a node is an equipment that comprises means of transmitting/receiving data on a selected radio channel to/from other nodes of the network, or other networks. The neighbouring nodes that can be reached directly without the use of another node are called one-hop or 1-hop neighbour nodes.

The method proposed according to the present invention is based on the use of static and dynamic S-SLOT allocation mechanisms. Proposed solution according to the invention uses a new concept of normal sub-cycle (normal S-cycle) and improved sub-cycle (improved S-cycle) allowing the PDN nodes to be managed. A node needs to know its 2-hop neighbourhood. Neighbours are discovered thanks to the S-SLOTs or other kinds of slots such as beacon slots.

Static allocations are determined, for example, according to the identity of nodes and have, as aim, to give at least one S-SLOT transmission opportunity to each node for each sub-cycle, whatever the topology of the network.

Dynamic allocations are determined by executing spatial reuse mechanisms and their aim is to allow nodes, except PDN nodes, to transmit more than once in the improved sub-cycle, when topology authorizes it.

The object of the present invention is also based on the use of both slot statuses tables exchanged between nodes, and physical information (provided by the physical layer and used by the MAC (Medium Access Control) layer), in order to improve the convergence time and the reactivity, in view of the mobility of the nodes.

In the example given in the following description, the S-cycle is composed of two sub-cycles, temporally interleaved:

> **Normal S-cycle:** S-SLOTs are all assigned statically. S-SLOT spatial reuse is not allowed in the normal S-cycle. Each node has one and only one S-SLOT allocation in the normal S-cycle.
> **Improved S-cycle:** Each node has one S-SLOT assigned statically, plus, for all nodes except PDNs, one or more additional S-SLOTs assigned dynamically when S-SLOT spatial reuse is possible.

Definitions and concept being given, embodiments of the invention will now be described.

## Normal and improved S-cycles

In this example, as previously introduced, the S-cycle is composed of two sub-cycles, temporally interleaved:

> a) first sub-cycle or Normal S-cycle: S-SLOTs are all assigned statically. S-SLOT spatial reuse is not allowed in the normal S-cycle. Each node has one and only one S-SLOT allocation.
> b) second sub-cycle or Improved S-cycle: each node has one S-SLOT assigned statically, plus, for all nodes except PDNs, one or more additional S-SLOTs assigned dynamically when S-SLOT spatial reuse is possible.

The interleaving may be, for example, constituted of 50% of S-SLOTs in the normal S-cycle and 50% of S-SLOTs in the improved S-cycle, or any other values, a% for S-SLOTs in the normal S-cycle and b% of S-SLOTs in the improved S-cycle, the sum a+b being equal to 100%.

A PDN is not allowed to perform S-SLOT spatial reuse due to its large number of neighbours.

A PDN reduces the amount of S-SLOT spatial reuse that could take place in the network if this PDN was not present, for the following reasons:

- each time a PDN transmits, none of its 1-hop neighbours can transmit in the same S-SLOT. Otherwise, one (or more) 1-hop neighbour(s) of the PDN would be interfered.
- when a 1-hop neighbour of a PDN transmits, neither the PDN nor its 1-hop neighbours can transmit in the same S-SLOT. Otherwise, the PDN would be interfered.

As soon as a node has identified itself as a PDN, it stops performing reuse and it is not taken into account by its 1-hop neighbours to determine their potential reusable S-SLOTs. This solution allows performing reuse in the improved S-cycle as if there were no PDN in the network (i.e. the PDN node's neighbourhood is not taken into account when performing the S-SLOT spatial reuse).

A PDN may suffer collisions on the S-SLOTs in the improved S-cycle that are reused. These S-SLOTs may not be properly received (decoded) by the PDN. This is why the normal S-cycle exists.

As S-SLOT spatial reuse is not allowed for each PDN node in the normal S-cycle and as S-SLOTs are all assigned statically, collisions cannot occur and each PDN receives all S-SLOTs properly in the normal S-cycle.

The normal S-cycle is defined as NMAX occurrences of S-SLOTs, with an even S-SLOT number for example in the S-cycle (S-SLOTs 0, 2, 4, .., 2*NMAX-2), where NMAX corresponds to the maximum number of nodes allowed in the network.

The improved S-cycle is defined as NMAX occurrences of S-SLOTs, with an odd S-SLOT number for example in the S-cycle (S-SLOTs 1, 3,..., 2*NMAX-1) according to a repartition of 50% of S-SLOTs in the normal S-cycle and 50% of S-SLOTs in the improved S-cycle.

Now **the static S-SLOT allocation** will be described. Each node has one static S-SLOT allocation in the normal S-cycle and one static S-SLOT allocation in the improved S-cycle.

Transmission: the local node transmits during its static S-SLOT allocation in the normal S-cycle and in the improved S-cycle,

Reception: The local node is in a receiving state during all the S-SLOTs of the normal and improved S-cycles, except its own two static S-SLOT allocations.

Then the **dynamic S-SLOT allocation** will be presented. The aim of the dynamic S-SLOT allocation mechanisms is to perform S-SLOT spatial reuse, when topology makes it possible, and to allow nodes, except PDNs, to transmit more than once in the improved S-cycle.

Dynamic S-SLOT allocations are equitably shared in a 2-hop neighbourhood.

A PDN is not allowed to perform S-SLOT spatial reuse due to its large number of neighbours.

A PDN reduces the amount of S-SLOT spatial reuse that could take place in the network if this PDN was not present. As soon as a node has identified itself as a PDN, it stops performing reuse and it is not taken into account by its 1-hop neighbours to determine their potential reusable S-SLOTs. This solution allows to do reuse in the improved S-cycle as if there were no PDN in the network (i.e. the PDN node's neighbourhood is not taken into account when performing the S-SLOT spatial reuse).

The dynamic S-SLOT allocation mechanisms are single channel mechanisms. One channel, $C_0$, is used by all the nodes of the network to transmit in S-SLOTs.

In order to execute the different mechanisms previously described, the nodes of the network according to the present invention must maintain tables that will now be described.

Each node maintains a local table LT, a global table GT and a summary of the global table SGT.

**Local table LT**

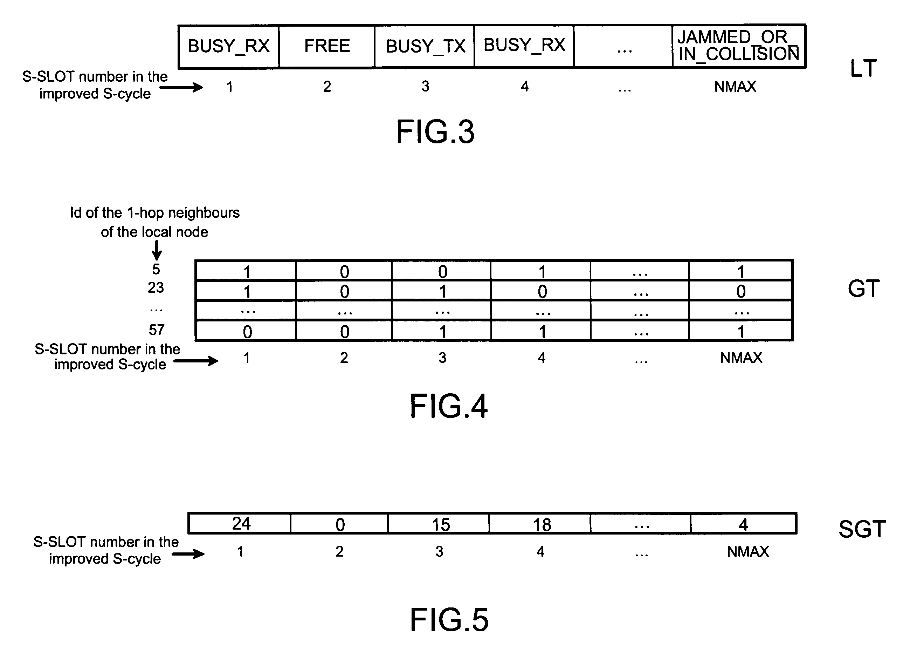

The local table describes the status of the NMAX S-SLOTs of the improved S-cycle, from the local node point of view. An example is given on figure 3.

Let j designate the S-SLOT number in the improved S-cycle. Let LT(j) represent the status of S-SLOT j.

The possible status of an S-SLOT in the improved S-cycle is for example one of the four following statuses:

- BUSY_TX: The local node transmits in the S-SLOT;
- FREE: The local node does not transmit in the S-SLOT and it does not detect enough activity in the S-SLOT;
- BUSY_RX: The local node receives data properly, or it detects some activity in the S-SLOT even though it is not able to decode data properly;
- JAMMED_OR_IN_COLLISION: The S-SLOT is jammed by an enemy or suffers a collision from the network itself.

One embodiment to build the local table LT comprises for example the following steps:

- analyzing the local tables transmitted by its 1-hop neighbours and received by the local node;
- analyzing the metrics provided by the physical (PHY) layer when the local node is listening to a S-SLOT;
- taking into account the static S-SLOT allocation of its 1-hop neighbours in the improved S-cycle;
- taking into account the static S-SLOT allocation of the local node, and its potential dynamic S-SLOT allocation(s).

More generally an example of steps to construct a local table is for example performed in the following order:

- Logical analysis of a local table received by the local node,
- Logical detection of a collision,
- Logical detection of a resolution of a logical collision,
- Physical detection of the three statuses FREE, BUSY_RX or JAMMED_OR_IN_COLLISION,
- BUSY_RX status for the static S-SLOT allocations of 1-hop neighbours.

A non-PDN node transmits its current local table LT in each of its static S-SLOT allocations, and potentially in each of its dynamic S-SLOT allocations, if better interactivity and convergence times are desired.

A PDN node does not transmit its local table because a PDN is not allowed to perform S-SLOT spatial reuse, and it is useless for a PDN to transmit its local table because the latter should not be taken into account by its 1-hop neighbours.

This solution allows non-PDN nodes to perform S-SLOT spatial reuse in the improved S-cycle as if there were no PDN in the network (i.e. the PDN node's neighbourhood is not taken into account when performing the S-SLOT spatial reuse).

When a node is switched on, the S-SLOT corresponding to the static allocation of the local node in the improved S-cycle always has a BUSY_TX status, and all the other S-SLOTs have by default the FREE status.

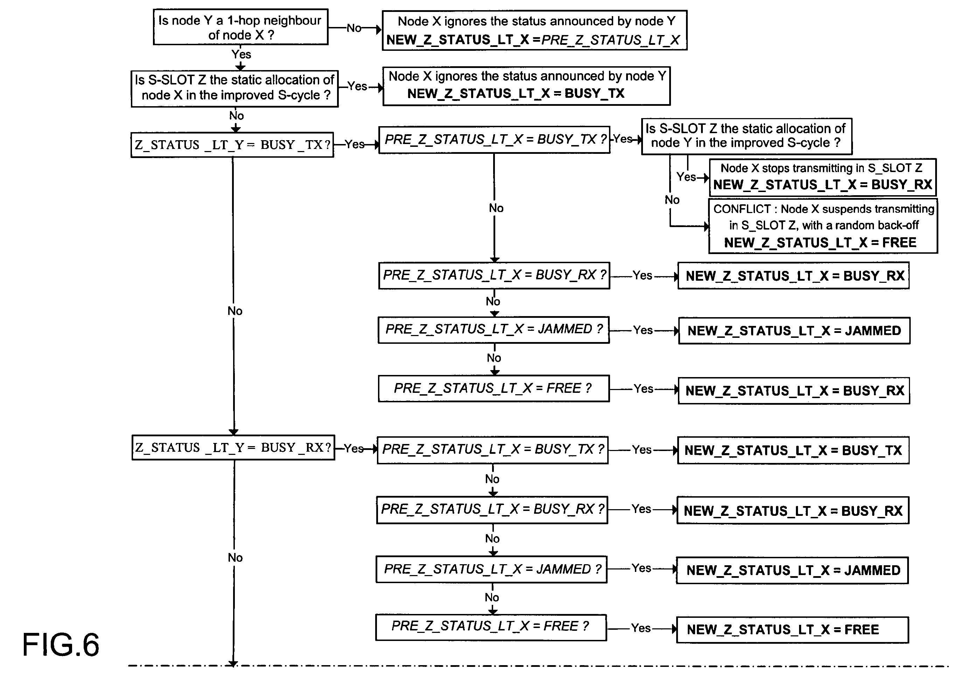

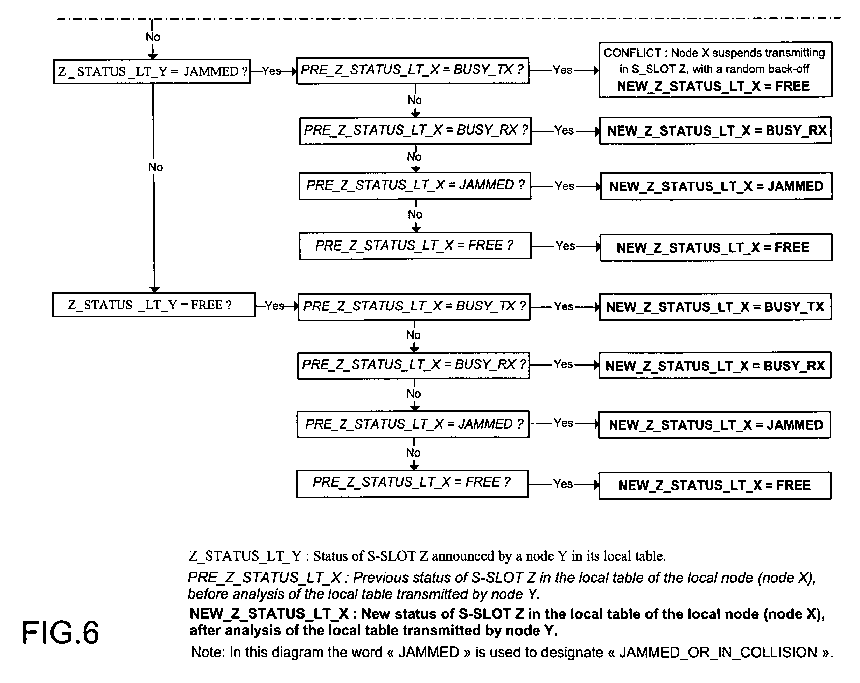

Figure 6 describes an example of analysis of a local table received by the local node.

## Global table GT

A node also has a global table which is, for example, in the form of a matrix. The aim of this global table is to indicate the possible reusability of S-SLOTs in the improved S-cycle, notably by analyzing the local tables received from each 1-hop neighbour of the local node. An example is given on figure 4.

Let i represent the identity Id of a 1-hop neighbour from which the local node has received a local table.

Let j designate the S-SLOT number in the improved S-cycle. GT(i,j) can either be equal to 0 or 1.

GT(i,j)=0 means that S-SLOT j is potentially reusable by the local node, according to the local table transmitted by node i.

GT(i,j)=1 means that S-SLOT j is not reusable by the local node, according to the local table transmitted by node i.

If the local table received from a 1-hop neighbour i indicates that S-SLOT j is FREE, then GT(i,j)=0.

If the local table received from a 1-hop neighbour i indicates that S-SLOT j is BUSY_RX, BUSY_TX or JAMMED_OR_IN_COLLISION, then GT(i,j)=1.

The entry in the global table corresponding to the local table sent by a 1-hop neighbour should be saved until a new local table is received from this neighbour.

The global table received from a {NON} 1-hop neighbour should be discarded. The expression {NON} 1-hop neighbour means that the node is not a "1-hop neighbour".

If a 1-hop neighbour becomes a {NON} 1-hop neighbour, its corresponding entry in the global table should be deleted.

As soon as a 1-hop neighbour becomes a PDN, its corresponding entry in the global table should be deleted.

## Summary of the global table SGT

As introduced previously, a node also has a summary of the global table SGT; an example is given on figure 5.

The aim of the summary of the global table SGT is to determine which S-SLOTs in the improved S-cycle can finally be reused by the local node.

Let i represent the id of a 1-hop neighbour from which the local node has received a local table; let j designate the S-SLOT number in the improved S-cycle;

Let $SGT(j) = \sum_i GT(i,j)$ The summary of the global table is updated after each update of the global table.

A back-off counter can be created for a S-SLOT j if:

- one of the two cases of conflict described in the diagram of logical analysis of a local table is met,
- or the status JAMMED_OR_IN_COLLISION is detected physically (using PHY metrics, as defined after).

The aim of the back-off counter is to avoid that the local node tries to reuse, at the next S-cycle or at the same time as a 1-hop neighbour, a S-SLOT that just suffered a conflict or a jamming.

The back-off counter is a random integer between 0 and a given number. It is, for example, decremented by 1 at the beginning of each S-cycle, till it reaches 0. If the back-off counter for S-SLOT is not equal to 0, this S-SLOT cannot be reused by the local node.

A reusable S-SLOT j respects, for example, the three following criteria:

- LT(j)=FREE,
- SGT(j)=0,
- The back-off counter for S-SLOT j is equal to 0.

If SGT(j)=0, this means that S-SLOT j is FREE for all the 1-hop neighbours of the local node.

In the example of figure 5, if the back-off counter for S-SLOT #2 is equal to 0, this S-SLOT is reusable by the local node because LT(2)=FREE (cf. figure 3) and SGT(2)=0 (see figure 5).

Figure 6 gives an example of logical analysis of a local table received by the local node. When the local node X in this example receives a local table LT transmitted by a node Y, the new status of S-SLOT Z in the local table should be determined according, for example, to the diagram of figure 6 where:

- Z_STATUS_LT_Y: Status of S-SLOT Z announced by a node Y in its local table.
- PRE_Z_STATUS_LT_X: Previous status of S-SLOT Z in the local table of the local node (node X), before logical analysis of the local table transmitted by node Y.
- NEW_Z_STATUS_LT_X: New status of S-SLOT Z in the local table of the local node (node X), after logical analysis of the local table transmitted by node Y.

In this diagram, the word « JAMMED " is used to designate « JAMMED_OR_IN_COLLISION ".

**The logical detection of a collision** may be realized in the following way; the status of S-SLOT j should be set to JAMMED_OR_IN_COLLISION in the local table LT of the local node when two or more 1-hop neighbours indicate in their local table the BUSY_TX status for S-SLOT j.

If two or more 1-hop neighbours announce their intentions to transmit in the same S-SLOT j, the local node detects in advance a logical collision in S-SLOT j. To prevent a physical collision to occur in S-SLOT j, the local node indicates in its local table that S-SLOT j is JAMMED_OR_IN_COLLISION.

**Logical detection of a resolution of a logical collision**

If a logical collision was detected on S-SLOT j less than one S-cycle ago, the local node can check the following conditions:

- Among the 1-hop neighbours involved in the logical collision, if only one of them indicates in its local table the BUSY_TX status for S-SLOT j, the status of S-SLOT j can be set to BUSY_RX in the local table of the local node.
- Among the 1-hop neighbours involved in the logical collision, if zero of them indicates in its local table the BUSY_TX status for S-SLOT j, the status of S-SLOT j can be set to FREE in the local table of the local node.

It is useful that the local node updates its local table if it logically detects the resolution of a logical collision, in order to stop transmitting the JAMMED_OR_IN_COLLISION status while there is no logical collision anymore. The terms "less than one S-cycle ago" are useful because, if the logical collision is not solved logically before S-SLOT j occurs, it will be analyzed physically (i.e. using the PHY metrics), when the local node listens to S-SLOT j.

According to the invention, the state of the radio channel can be analyzed using metrics provided by the PHY layer. When the local node (node X) is listening to S-SLOT Z in the improved S-cycle, the new status of S-SLOT Z in the local table of the local node should be determined. The three possible statuses are:

- FREE: the local node does not detect enough activity in the S- SLOT.
- BUSY_RX: the local node receives data properly, or it detects some activity in the S-SLOT even though it is not able to decode data properly.
- JAMMED_OR_IN_COLLISION: the S-SLOT is jammed by an enemy or suffers collisions from the network itself.

According to an embodiment of the invention, the maximum number MAX_DYN of dynamic S-SLOT allocations obtainable by a non-PDN node is chosen according to the 2-hop neighbourhood of the local node. Dynamic S-SLOT allocations are equitably shared in a 2-hop neighbourhood; Let L_USED_DYN a list of the dynamic S-SLOT allocations of the local node and S_L_USED_DYN designates the size of the L_USED_DYN list.

**Proper number of dynamic S-SLOT allocations: S_L_USED_DYN = MAX_DYN**

If a non-PDN node has the theoretical number of dynamic S-SLOT allocations, it does not need to release or gain allocations.

**Release of dynamic S-SLOT allocations for a non-PDN node: S_L_USED_DYN > MAX_DYN**

If a non-PDN node has more dynamic S-SLOT allocations than the maximum number, it has to release R = S_L_USED_DYN - MAX_DYN allocation(s). The R dynamic S-SLOT allocation(s) to release can either be:

- randomly chosen in the L_USED_DYN list,
- chosen in the L_USED_DYN list so that the two static S-SLOT allocations and the potentially remaining dynamic S-SLOT allocation(s) are as uniformly distributed as possible in the S-cycle.

**Released S-SLOT - BUSY_TX to FREE status**

The local table LT of the local node is updated to take into account the status of the released S-SLOT(s). The status of a released S-SLOT is set from BUSY_TX to FREE in the local table of the local node. Let L_AVAIL_DYN the list of the reusable S-SLOTs j that fulfils the three following criteria:

- LT(j)=FREE,
- SGT(j)=0,
- the back-off counter for S-SLOT j is equal to 0.

Let S_L_AVAIL_DYN the size of the L_AVAIL_DYN list.

**Gain of dynamic S-SLOT allocations for a non-PDN node: S_L_USED_DYN < MAX_DYN**

If a non-PDN node has less dynamic S-SLOT allocations than the maximum number, it has to gain G allocation(s):

If S_L_AVAIL_DYN ≤ MAX_DYN - S_L_USED_DYN, G = S_L_AVAIL_DYN,
If S_L_AVAIL_DYN > MAX_DYN - S_L_USED_DYN, G = MAX_DYN - S_L_USED_DYN.

The G dynamic S-SLOT allocation(s) to gain can either be:

- randomly chosen in the L_AVAIL_DYN list,
- chosen in the L_AVAIL_DYN list so that the static S-SLOT allocations and the dynamic S-SLOT allocation(s) are as uniformly distributed as possible in the S-cycle.

**Gained S-SLOT - FREE to BUSY_TX status**

The local table LT of the local node is updated to take into account the status of the gained S-SLOT(s). The status of a gained S-SLOT is set from FREE to BUSY_TX in the local table of the local node.

Without departing of the scope of the invention, it is possible to apply:

- both the physical and logical parts of the algorithms described previously,
- or only the logical part,
- or only the physical part.

**If only the logical part of the algorithms is applied:**

All the dynamic reuse requirements should be applied except: the step "Physical detection of the FREE, BUSY_RX or JAMMED_OR_IN_COLLISION status" in the construction of the Local Table.

**If only the physical part of the algorithms is applied:**

The following requirements should still be applied:

- the BUSY_TX status for the static S-SLOT allocations of the local node, i.e when a node is switched on, the S-SLOT corresponding to the static allocation of the local node in the improved S-cycle always has a BUSY_TX status, and all the other S-SLOTs have by default the FREE status."

    - the BUSY_RX status for the static S-SLOT allocations of 1-hop neighbours (concept of priority of static S-SLOTs),
    - the construction of the global table, for example:

        - 1-hop neighbours,
        - Memorisation,
        - Local table received from a {NON} 1-hop neighbour,
        - 1-hop neighbour becoming {NON} 1-hop neighbour,
        - 1-hop neighbour becoming PDN,

    - the Back-off counter, the proper number of dynamic S-SLOT allocations; the release of dynamic S-SLOT allocations for a non-PDN node; the released S-SLOT - BUSY_TX to FREE status; the construction of the summary of the global table; the gain of dynamic S-SLOT allocations for a non-PDN node; the gained S-SLOT - FREE to BUSY_TX status.

- only the physical part of the requirement on the back-off counter should be applied.

**Advantages**

Method and network according to the present invention offer notably the following advantages:

• Minimizing the impact of PDN nodes in the performances of a mobile network;
• Using the logical and physical information in order to improve convergence time and reactive time, in view of the mobility of the nodes of network.

**Claims**

1. A method for managing the spatial reuse of slots in a mobile network comprising several nodes Ni, comprising a S-cycle comprising a first sub-cycle and a second sub-cycle, said network comprising one or more Potentially Disruptive Nodes (PDN), said PDN node having a wide connectivity compared to the one of the mobile network average, said nodes Ni and PDN comprising a local table LT, a global table GT indicating the possible reusability of S-SLOTs, S-SLOTs being defined as a slot adapted to transmit signalling or user traffic exchanged between the nodes, and a summary of the global table SGT adapted to determine which S-SLOTs in said second sub-cycle can finally be reused by the local node, said method comprising the interleaving of said two sub-cycles:

    • first sub-cycle, the normal S-cycle, where S-SLOTs are all assigned statically and where each node has one and only one S-SLOT allocation,
    • second sub-cycle, the improved S-cycle, where each node has one S-SLOT assigned statically, and where for all nodes except PDN nodes, one or more additional S-SLOTs is assigned dynamically when topology makes it possible, dynamic S-SLOT allocations being equitably shared in a 2-hop neighbourhood, and wherein then dynamic S-SLOT allocations are determined by performing S-SLOT spatial reuse,
• a counter of back-off counter used to avoid that the local node tries to reuse at the next S-cycle or at the same time as a 1-hop neighbour, a S-SLOT that just suffered a conflict or a jamming.

2. Method according to claim 1, wherein if two or more 1-hop neighbours announce their intentions to transmit in the same S-SLOT j, i.e status BUSY_TX for S-SLOT j, the local node detects in advance a logical collision in S-SLOT j and to prevent a physical collision to occur in S-SLOT j, the local node indicates in its local table LT that S-SLOT j is JAMMED_OR_IN_COLLISION.

3. A method according to claim 1 wherein each local node updates its local table LT if it logically detects the resolution of a logical collision, in order to stop transmitting a JAMMED_OR_IN_COLLISION status.
If a logical collision has been detected on S-SLOT j less than one S-cycle ago, the local node shall check the following conditions:

• among the 1-hop neighbours involved in the logical collision, if only one of them indicates in its local table a BUSY_TX status for S-SLOT j, the status of S-SLOT j shall be set to BUSY_RX in the local table LT of the local node,
• among the 1-hop neighbours involved in the logical collision, if zero of them indicates in its local table LT the BUSY_TX status for S-SLOT j, the status of S-SLOT j shall be set to FREE in the local table of the local node,

4. A method according to claim 1, wherein as soon as a node has identified itself as a PDN node, it stops transmitting its local table and release its potential dynamic S-SLOT allocations, PDN node continues updating its local table LT, its global table GT and summary of the global table SGT.

5. A method according to claim 1 wherein a non-PDN node transmits its current table in each of its static S-SLOT allocations, and if needed in each of its potential dynamic S-SLOT allocations in order to improve convergence times.

6. A method according to claim 1 wherein in the improved S-cycle a S-SLOT has one of the four possible statuses:

- BUSY_TX: the local node transmits in the S-SLOT;
- FREE: the local node does not transmit in the S-SLOT and it does not detect enough activity in the S-SLOT;

- BUSY_RX: the local node receives data properly, or it detects some activity in the S-SLOT even though it is not able to decode data properly;
- JAMMED_OR_IN_COLLISION: the S-SLOT is jammed by an enemy or suffers collisions from the network itself.

7. A method according to claim 1 wherein the dynamic S-SLOT allocations mechanisms use, among other variables, the number of 2-hop neighbours of the local node, in order to calculate the maximum number of dynamic S-SLOT allocations the local node can have and if the number of 2-hop neighbours is zero, the node tries to reuse all the dynamic S-SLOTs of the improved S-cycle.

8. A method according to claim 1 wherein the steps to build a local table of a local node are:

• analysis of a local table transmitted by its 1-hop neighbours and received by said local node,
• logical detection of a collision,
• logical detection of a resolution of a logical collision,
• Physical detection of the FREE, BUSY_RX or JAMMED_OR_IN_COLLISION status,
• BUSY_RX status for the static S-SLOT allocations of 1-hop neighbours.

9. A method according to claim 1 wherein the global table, which indicates the possible reusability of S-SLOTs in the improved S-cycle, is built by analyzing the local tables received from each 1-hop neighbour of the local node in the following way:

Let i represent the identity id of a 1-hop neighbour from which the local node has received a local table,
Let j designate the S-SLOT number in the improved S-cycle, $GT(i,j)$ being equal to 0 or 1,
If the local table received from a 1-hop neighbour i indicates that S-SLOT j is FREE, then $GT(i,j)=0$,
If the local table received from a 1-hop neighbour i indicates that S-SLOT j is BUSY_RX, BUSY_TX or JAMMED_OR_IN_COLLISION, then $GT(i,j)=1$.

10. A method according to claim 1 wherein to determine which S-SLOTs in the improved S-cycle can finally be reused by the local node it comprises the construction of the summary global table SGT:

Let i represent the id of a 1-hop neighbour from which the local node has received a local table,

Let j designate the S-SLOT number in the im-

proved S-cycle, $$SGT(j) = \sum_i GT(i,j)$$

GT(i,j) being equal to 0 or 1 and then a reusable S-SLOT verifies the following criteria:

- LT(j)=FREE,
- SGT(j)=0.

11. A method according to claim 10 wherein a back-off counter for S-SLOT j is equal to 0, back-off counter being a random integer between 0 and a given number.

12. A network for managing reuse in single channel condition in a mobile network comprising several nodes Ni, said network comprising one or more Potentially Disruptive Nodes (PDN), said PDN node having a wide connectivity compared to the one of the mobile network average and a large number of neighbours, said nodes Ni and PDN comprising a local table LT, a global table GT, and a summary of the global table SGT, a back-off counter adapted to avoid that the local node tries to reuse, at the next S-cycle or at the same time as a 1-hop neighbour, a S-SLOT that just suffered a conflict or a jamming, S-SLOTs being defined as a slot adapted to transmit signalling or user traffic exchanged between the nodes, wherein the nodes of the network comprises means for executing at least the steps of a method according to one of claims 1 to 11.

**Patentansprüche**

1. Verfahren zur Verwaltung der räumlichen Wiederverwendung von Schlitzen oder Intervall in einem Mobilfunknetz mit mehreren Knoten Ni, umfassend einen S-Zyklus mit einem ersten Teilzyklus und einem zweiten Teilzyklus, wobei das Netz einen oder mehrere potenzielle Störknoten (PDN) umfasst, wobei der PDN-Knoten eine breite Konnektivität im Vergleich zu der des Mobilfunknetzdurchschnitts hat, wobei die Knoten Ni und PDN umfassen: eine lokale Tabelle LT, eine globale Tabelle GT, die die mögliche Wiederverwendbarkeit von S-SLOTs anzeigt, wobei S-SLOTs definiert sind als Schlitz, der geeignet ist, zwischen den Knoten auszutauschende Signalisierung oder Benutzerkehr zu übertragen, und eine Zusammenfassung der globalen Tabelle SGT, die geeignet ist, zu bestimmen, welche S-SLOTs in dem zweiten Teilzyklus schließlich durch den lokalen Knoten wiederverwendet werden können, wobei das Verfahren die Verschachtelung der beiden Teilzyklen umfasst:

   • erster Teilzyklus, der normale S-Zyklus, wo S-SLOTs alle statisch zugeordnet sind und wo jeder Knoten eine und nur eine S-SLOT-Zuweisung hat,
   • zweiter Teilzyklus, der verbesserte S-Zyklus, wo jedem Knoten ein S-SLOT statisch zugeordnet ist und wo für alle Knoten außer PDN-Knoten ein oder mehrere zusätzliche S-SLOTs dynamisch zugeordnet werden, wenn es die Topologie ermöglicht, wobei dynamische S-SLOT-Zuweisungen in einer 2-Hop-Nachbarschaft gerecht geteilt werden und wobei die dynamischen S-SLOT-Zuweisungen bestimmt werden, indem räumliche S-SLOT-Wiedemerwendung erfolgt,
   • ein Zähler eines Backoff-Zählers, der verwendet wird, um zu vermeiden, dass der lokale Knoten versucht, im nächsten S-Zyklus oder zur gleichen Zeit wie ein 1-Hop-Nachbar einen S-SLOT wiederzuverwenden, der gerade einen Konflikt oder eine Störung erlitten hat.

2. Verfahren nach Anspruch 1, wobei, wenn zwei oder mehr 1-Hop-Nachbarn ihre Absichten ankündigen, in demselben S-SLOT j zu übertragen, d.h. Status BUSY_TX für S-SLOT j, der lokale Knoten im Voraus eine logische Kollision in S-SLOT j erkennt, und um zu verhindern, dass eine physische Kollision in S-SLOT j erfolgt, der lokale Knoten in seiner lokalen Tabelle LT Folgendes anzeigt: S-SLOT j ist JAMMED_OR_IN_COLLISION.

3. Verfahren nach Anspruch 1, wobei jeder lokale Knoten seine lokale Tabelle LT aktualisiert, wenn er die Auflösung einer logischen Kollision logisch erkennt, um die Übertragung eines JAMMED_OR_IN_COLLISION-Status zu stoppen. Wenn eine logische Kollision im S-SLOT j weniger als einen S-Zyklus vorher erkannt worden ist, überprüft der lokale Knoten die folgenden Bedingungen:

   • wenn unter den in die logische Kollision verwickelten 1-Hop-Nachbarn nur einer von ihnen in seiner lokalen Tabelle einen BUSY_TX-Status für S-SLOT j anzeigt, wird der Status von S-SLOT j in der lokalen Tabelle LT des lokalen Knotens auf BUSY_RX gesetzt,
   • wenn unter den in die logische Kollision verwickelten 1-Hop-Nachbarn Null von ihnen in ihrer lokalen Tabelle LT den BUSY-TX-Status für j S-SLOT anzeigen, wird der Status von S-SLOT j in der lokalen Tabelle des lokalen Knotens auf FREE gesetzt.

4. Verfahren nach Anspruch 1, wobei, sobald ein Knoten sich als PDN-Knoten zu erkennen gegeben hat, er die Übertragung seiner lokalen Tabelle stoppt und seine potenziellen dynamischen S-SLOT-Zuweisungen freigibt, wobei der PDN-Knoten weiterhin seine lokale Tabelle LT, seine globale Tabelle GT und eine Zusammenfassung der globalen Tabelle SGT aktualisiert.

5. Verfahren nach Anspruch 1, wobei ein Nicht-PDN-Knoten seine aktuelle Tabelle in jeder seiner statischen S-SLOT-Zuweisungen und bei Bedarf in jeder seiner potentiellen dynamischen S-SLOT-Zuweisungen überträgt, um Konvergenzzeiten zu verbessern.

6. Verfahren nach Anspruch 1, wobei in dem verbesserten S-Zyklus ein S-LOT einen der vier möglichen Zustände hat:

   - BUSY_TX: der lokale Knoten überträgt im S-SLOT;
   - FREE: der lokale Knoten überträgt nicht im S-SLOT und erkennt keine ausreichende Aktivität im S-SLOT;
   - BUSY_RX: der lokale Knoten empfängt Daten ordnungsgemäß oder er erkennt eine gewisse Aktivität im S-SLOT, obwohl er nicht in der Lage ist, Daten ordnungsgemäß zu dekodieren;
   - JAMMED_OR_IN_COLLISION: der S-SLOT ist durch einen Feind gestört oder erleidet Kollisionen aus dem Netz selbst.

7. Verfahren nach Anspruch 1, wobei die dynamischen S-SLOT-Zuweisungsmechanismen neben anderen Variablen die Anzahl von 2-Hop-Nachbarn des lokalen Knotens verwenden, um die maximale Anzahl von dynamischen S-SLOT-Zuweisungen, die der lokale Knoten haben kann, zu berechnen, und wenn die Anzahl von 2-Hop-Nachbarn Null ist, der Knoten versucht, alle dynamischen S-SLOTs des verbesserten S-Zyklus wiederzuverwenden.

8. Verfahren nach Anspruch 1, wobei die Schritte zum Aufbau einer lokalen Tabelle eines lokalen Knotens Folgende sind:

   • Analyse einer lokalen Tabelle, die durch seine 1-Hop-Nachbarn übertragen und durch den lokalen Knoten empfangen wird,
   • logische Erkennung einer Kollision,
   • logische Erfassung einer Auflösung einer logischen Kollision,
   • physische Erkennung des FREE-, BUSY_RX- oder JAMMED_OR_IN_COLLISION-Status,
   • BUSY_RX-Status für die statischen S-SLOT-Zuweisungen von 1-Hop-Nachbarn.

9. Verfahren nach Anspruch 1, wobei die globale Tabelle, die die mögliche Wiederverwendbarkeit von S-SLOTs in dem verbesserten S-Zyklus anzeigt, durch Analysieren der lokalen Tabellen, die von jedem 1-Hop-Nachbain des lokalen Knotens empfangen werden, folgendermaßen aufgebaut wird:

i sei die Identität id eines 1-Hop-Nachbarn, von dem der lokale Knoten eine lokale Tabelle empfangen hat,
j sei die S-SLOT-Nummer in dem verbesserten S-Zyklus, wobei GT (i, j) gleich 0 oder 1 ist,
wenn die von einem 1-Hop-Nachbarn i empfangene lokale Tabelle anzeigt: S-SLOT j ist FREE, dann ist GT (i, j) = 0,
wenn die von einem 1-Hop-Nachbarn i empfangen lokale Tabelle anzeigt: S-SLOT j ist BUSY_RX, BUSY_TX oder JAMMED_OR_IN_COLLISION, dann ist GT (i, j) = 1.

10. Verfahren nach Anspruch 1, wobei es, um zu bestimmen, welche S-SLOTs in dem verbesserten S-Zyklus schließlich durch den lokalen Knoten wiederverwendet werden, den Aufbau der Zusammenfassung der globalen Tabelle SGT umfasst:

i sei die id eines 1-Hop-Nachbar, von dem der lokale Knoten eine lokale Tabelle empfangen hat,
j sei die S-SLOT-Nummer in dem verbesserten S-Zyklus, wobei gilt: $SGT\ (j) =$

$$SGT\,(j) = \sum_i GT\,(i,j),$$ wobei GT (i, j) gleich 0 oder 1 ist, und dann prüft ein wiederverwendbarer S-SLOT die folgenden Kriterien:

   - LT (j) = FREE
   - SGT (j) = 0.

11. Verfahren nach Anspruch 10, wobei ein Backoff-Zähler für S-SLOT j gleich 0 ist, wobei der Backoff-Zähler eine ganzzahlige Zufallszahl zwischen 0 und einer vorgegebenen Zahl ist.

12. Netz zur Verwaltung der Wiederverwendung unter einkanaliger Bedingung in einem Mobilfunknetz mit mehreren Knoten Ni, wobei das Netz einen oder mehrere potenzielle Störknoten (PDN) umfasst, wobei der PDN-Knoten eine breite Konnektivität im Vergleich zu der des Mobilfunknetzdurchschnitts und eine große Anzahl von Nachbarn hat, wobei die Knoten Ni und PDN eine lokale Tabelle LT, eine globale Tabelle GT und eine Zusammenfassung der globalen Tabelle SGT umfassen, ein Backoff-Zähler dafür geeignet ist, zu vermeiden, dass der lokale Knoten versucht, im nächsten S-Zyklus oder zur gleichen Zeit wie der 1-Hop-Nachbar einen S-SLOT wiederzuverwenden, der gerade einen Konflikt oder eine Störung erlitten hat, wobei S-SLOTs definiert sind als Schlitz, der geeignet ist, zwischen den Knoten auszutauschende Signalisierung oder Benutzerverkehr zu übertragen, wobei die Knoten des Netzes Mittel zum Ausführen zumindest der Schritte eines Verfahrens nach einem der Ansprüche 1 bis 11 umfassen.

**Revendications**

1. Procédé de gestion de la réutilisation spatiale de créneaux ou slots dans un réseau mobile comprenant plusieurs noeuds « Ni », comprenant un cycle « S-cycle » comprenant un premier sous-cycle et un second sous-cycle, ledit réseau comprenant un ou plusieurs noeuds potentiellement perturbateurs (PDN), ledit noeud PDN présentant une connectivité étendue comparée à celle de la moyenne du réseau mobile, lesdits noeuds « Ni » et « PDN » comprenant une table locale LT, une table globale GT, indiquant la possibilité de réutilisation éventuelle des slots « S-SLOT », les slots « S-SLOT » étant définis comme des slots adaptés à transmettre une signalisation ou un trafic d'utilisateur échangé(e) entre les noeuds, et une synthèse de la table globale, SGT, adaptée à déterminer quels SLOTS « S-SLOT » dans ledit second sous-cycle peuvent finalement être réutilisés par le noeud local, ledit procédé comprenant l'entrelacement desdits deux sous-cycles :

   • le premier sous-cycle, le cycle « S » normal, où les slots « S-SLOT » sont tous affectés statiquement, et où chaque noeud a une seule affectation de slots « S-SLOT » ;
   • le second sous-cycle, le cycle « S » amélioré, où chaque noeud a un slot « S-SLOT » affecté statiquement, et où, pour tous les noeuds à l'exception des noeuds PDN, un ou plusieurs slots « S-SLOT » supplémentaires sont affectés dynamiquement lorsque la topologie le permet, les affectations dynamiques de slots « S-SLOT » étant équitablement partagées dans un voisinage à 2 sauts, et dans lequel les affectations dynamiques de slots « S-SLOT » sont déterminées en mettant en oeuvre une réutilisation spatiale de slots « S-SLOT » ;
   • un compteur de temporisation utilisé afin d'éviter que le noeud local n'essaie de réutiliser, au cycle « S » suivant, ou en même temps qu'un voisin à 1 saut, un slot « S-SLOT » ayant subi juste avant un conflit ou un brouillage.

2. Procédé selon la revendication 1, dans lequel, si deux ou plusieurs voisins à 1 saut annoncent leur intention d'émettre dans le même slot « S-SLOT » « j », i.e. état de transmission occupé « BUSY_TX » pour le slot « S-SLOT » « j », le noeud local détecte à l'avance une collision logique dans le slot « S-SLOT » «j » et pour empêcher qu'une collision physique ne se produise dans le slot « S-SLOT » « j », le noeud local indique dans sa table locale, LT, que le slot « S-SLOT » « j » subit une collision ou un brouillage « JAMMED_OR_IN_COLLISION ».

3. Procédé selon la revendication 1, dans lequel chaque noeud local met à jour sa table locale, LT, s'il détecte de manière logique la résolution d'une collision logique, afin d'interrompre la transmission d'un état « JAMMED_OR_IN_COLLISION » ;
   si une collision logique a été détectée sur le slot « S-SLOT » « j » il y a moins d'un cycle « S », le noeud local vérifie les conditions suivantes :

   • parmi les voisins à 1 saut impliqués dans la collision logique, si un seul d'entre eux indique dans sa table locale un état « BUSY_TX » pour le slot « S-SLOT » «j », l'état du slot «S-SLOT» « j » est défini sur l'état de réception occupée « BUSY_RX » dans la table locale, LT, du noeud local ;
   • parmi les voisins à 1 saut impliqués dans la collision logique, si aucun d'entre eux n'indique dans sa table locale, LT, l'état « BUSY_TX » pour le slot « S-SLOT » « j », l'état du slot « S-SLOT » « j » est défini sur l'état libre « FREE » dans la table locale du noeud local.

4. Procédé selon la revendication 1, dans lequel, dès lors qu'un noeud s'est lui-même identifié comme un noeud PDN, il cesse de transmettre sa table locale et libère ses affectations dynamiques potentielles de slots « S-SLOT », le noeud PDN continue de mettre à jour sa table locale LT, sa table globale GT, et une synthèse de la table globale SGT.

5. Procédé selon la revendication 1, dans lequel un noeud non PDN transmet sa table en cours dans chacune de ses affectations statiques de slots « S-SLOT », et, si nécessaire, dans chacune de ses affectations dynamiques potentielles de slots « S-SLOT », afin d'améliorer les temps de convergence.

6. Procédé selon la revendication 1, dans lequel, dans le cycle « S » amélioré, un slot « S-SLOT » présente l'un des quatre états possibles donnés ci-dessous :

   - « BUSY_TX » : le noeud local émet dans le slot « S-SLOT » ;
   - « FREE » : le noeud local n'émet pas dans le slot « S-SLOT » et il ne détecte pas suffisamment d'activité dans le slot « S-SLOT » ;
   - « BUSY_RX » : le noeud local reçoit correctement des données, ou il détecte de l'activité dans le slot « S-SLOT » bien qu'il ne parvienne pas à décoder correctement les données ;
   - « JAMMED_OR_IN_COLLISION » : le slot « S-SLOT » subit un brouillage de la part d'un ennemi ou subit des collisions du réseau lui-même.

7. Procédé selon la revendication 1, dans lequel les mécanismes d'affectations dynamiques de slots « S-SLOT », utilisent, entre autres variables, le nombre de voisins à 2 sauts du noeud local, afin de calculer le nombre maximal d'affectations dynamiques de slots « S-SLOT » que le noeud local peut présenter, et si le nombre de voisins à 2 sauts est égal à zéro, le noeud essaie de réutiliser tous les slots « S-SLOT » dynamiques du cycle « S » amélioré.

8. Procédé selon la revendication 1, dans lequel les étapes permettant de construire une table locale d'un noeud local sont les suivantes :

    • l'analyse d'une table locale transmise par ses voisins à 1 saut et reçue par ledit noeud local ;
    • la détection logique d'une collision ;
    • la détection logique d'une résolution d'une collision logique ;
    • la détection physique de l'état « FREE », de l'état « BUSY_RX » ou de l'état « JAMMED_OR_IN_COLLISION » ;
    • l'état « BUSY_RX » pour les affectations statiques de slots « S-SLOT » de voisins à 1 saut.

9. Procédé selon la revendication 1, dans lequel la table globale, qui indique la possibilité de réutilisation éventuelle de slots « S-SLOT » dans le cycle « S » amélioré, est construite en analysant les tables locales reçues à partir de chaque voisin à 1 saut du noeud local, de la manière suivante :

    supposons que « i » représente l'identifiant « id » d'un voisin à 1 saut à partir duquel le noeud local a reçu une table locale ;
    supposons que « j » désigne le nombre de slots « S-SLOT » dans le cycle « S » amélioré, $GT(i,j)$ étant égal à 0 ou 1 ;
    si la table locale reçue à partir d'un voisin à 1 saut « i » indique que le slot « S-SLOT » « j » présente l'état « FREE », alors $GT(i, j) = 0$ ;
    si la table locale reçue à partir d'un voisin à 1 saut « i » indique que le slot « S-SLOT » « j » présente l'état « BUSY_RX », « BUSY_TX » ou « JAMMED_OR_IN_COLLISION », alors $GT(i, j) = 1$.

10. Procédé selon la revendication 1, dans lequel, pour déterminer quels slots « S-SLOT » dans le cycle « S » amélioré peuvent finalement être réutilisés par le noeud local, le procédé comprend la construction de la synthèse de la table globale, SGT :

    en supposant que « i » représente l'identifiant « id » d'un voisin à 1 saut à partir duquel le noeud local a reçu une table locale ;
    en supposant que « j » désigne le nombre de slots « S-SLOT » dans le cycle « S » amélioré,

$$SGT(j) = \sum_i GT(i,j)$$ $GT(i, j)$ étant égal à 0 ou 1 et en vérifiant qu'un slot « S-SLOT » réutilisable satisfait les critères suivants :

    - $LT(j)$ = « FREE »,
    - $SGT(j) = 0$.

11. Procédé selon la revendication 10, dans lequel un compteur de temporisation pour le slot « S-SLOT » « j » est égal à 0, le compteur de temporisation étant un nombre entier aléatoire compris entre 0 et un nombre donné.

12. Réseau destiné à gérer une réutilisation de slots en condition de canal unique dans un réseau mobile comprenant plusieurs noeuds « Ni », ledit réseau comprenant un ou plusieurs noeuds potentiellement perturbateurs (PDN), ledit noeud PDN présentant une connectivité étendue comparée à la connectivité de la moyenne du réseau mobile, et un nombre élevé de voisins, lesdits noeuds « Ni » et « PDN » comprenant une table locale LT, une table globale GT, et une synthèse de la table globale SGT, un compteur de temporisation adapté à éviter que le noeud local n'essaie de réutiliser, au cycle « S » successif, ou en même temps qu'un voisin à 1 saut, un slot « S-SLOT » ayant subi juste avant un conflit ou un brouillage, les slots « S-SLOT » étant définis comme des slots adaptés à transmettre une signalisation ou un trafic d'utilisateur échangé(e) entre les noeuds, dans lequel les noeuds du réseau comportent des moyens pour exécuter au moins les étapes d'un procédé selon l'une quelconque des revendications 1 à 11.

FIG.1

Physical view of a frame composed of 10 slots, with one
S-SLOT per frame in random position

▢ : S-SLOT in the normal S-cycle

▩ : S-SLOT in the improved S-cycle

Logical view of a S-cycle, composed of 2*NMAX S-SLOTS

Slot position in a frame

S-SLOT number in the S-cycle

FIG.2

EP 2 549 788 B1

**LT**

| BUSY_RX | FREE | BUSY_TX | BUSY_RX | ... | JAMMED OR IN_COLLISION |
|---------|------|---------|---------|-----|------------------------|
| 1 | 2 | 3 | 4 | ... | NMAX |

S-SLOT number in the improved S-cycle →

## FIG.3

**GT**

Id of the 1-hop neighbours of the local node →

| | 1 | 2 | 3 | 4 | ... | NMAX |
|----|---|---|---|---|-----|------|
| 5 | 1 | 0 | 0 | 1 | ... | 1 |
| 23 | 1 | 0 | 1 | 1 | ... | 0 |
| ... | ... | ... | ... | ... | ... | ... |
| 57 | 0 | 0 | 1 | 1 | ... | 1 |

S-SLOT number in the improved S-cycle →

## FIG.4

**SGT**

| 24 | 0 | 15 | 18 | ... | 4 |
|----|---|----|----|-----|---|
| 1 | 2 | 3 | 4 | ... | NMAX |

S-SLOT number in the improved S-cycle →

## FIG.5

EP 2 549 788 B1

```
┌─────────────────────────────┐          ┌──────────────────────────────────────────┐
│ Is node Y a 1-hop neighbour │          │ Node X ignores the status announced by node Y │
│        of node X ?          ├──No──────▶│ NEW_Z_STATUS_LT_X =PRE_Z_STATUS_LT_X         │
└──────────────┬──────────────┘          └──────────────────────────────────────────┘
             Yes
               ▼
┌─────────────────────────────┐          ┌──────────────────────────────────────────┐
│ Is S-SLOT Z the static allocation of │  │ Node X ignores the status announced by node Y │
│ node X in the improved S-cycle ?   ├─Yes▶│ NEW_Z_STATUS_LT_X = BUSY_TX                  │
└──────────────┬──────────────┘          └──────────────────────────────────────────┘
              No
               ▼
┌─────────────────────┐      ┌───────────────────────────┐      ┌─────────────────────────────────┐
│ Z_STATUS _LT_Y = BUSY _TX?├─Yes─▶│ PRE_Z_STATUS_LT_X = BUSY_TX ?├─Yes─▶│ Is S-SLOT Z the static allocation of │
└──────────┬──────────┘      └───────────────────────────┘      │ node Y in the improved S-cycle ?    │
                                                                 └──────────────┬──────────────────┘
                                                                    Yes─▶ ┌─────────────────────────────┐
                                                                          │ Node X stops transmitting in S_SLOT Z │
                                                                          │ NEW_Z_STATUS_LT_X = BUSY_RX          │
                                                                          └─────────────────────────────┘
                                                                    No
                                                                          ┌─────────────────────────────────┐
                                                                          │ CONFLICT : Node X suspends transmitting │
                                                                          │ in S_SLOT Z, with a random back-off    │
                                                                          │ NEW_Z_STATUS_LT_X = FREE              │
                                                                          └─────────────────────────────────┘
                             No
                              ▼
                   ┌───────────────────────────┐      ┌─────────────────────────────┐
                   │ PRE_Z_STATUS_LT_X = BUSY_RX ?├─Yes─▶│ NEW_Z_STATUS_LT_X = BUSY_RX │
                   └───────────────────────────┘      └─────────────────────────────┘
                              No
                              ▼
                   ┌───────────────────────────┐      ┌─────────────────────────────┐
                   │ PRE_Z_STATUS_LT_X = JAMMED ?├─Yes─▶│ NEW_Z_STATUS_LT_X = JAMMED  │
                   └───────────────────────────┘      └─────────────────────────────┘
                              No
                              ▼
                   ┌───────────────────────────┐      ┌─────────────────────────────┐
                   │ PRE_Z_STATUS_LT_X = FREE ? ├─Yes─▶│ NEW_Z_STATUS_LT_X = BUSY_RX │
                   └───────────────────────────┘      └─────────────────────────────┘

┌─────────────────────┐      ┌───────────────────────────┐      ┌─────────────────────────────┐
│ Z_STATUS _LT_Y = BUSY _RX?├─Yes─▶│ PRE_Z_STATUS_LT_X = BUSY_TX ?├─Yes─▶│ NEW_Z_STATUS_LT_X = BUSY_TX │
└──────────┬──────────┘      └───────────────────────────┘      └─────────────────────────────┘
                              No
                              ▼
                   ┌───────────────────────────┐      ┌─────────────────────────────┐
                   │ PRE_Z_STATUS_LT_X = BUSY_RX ?├─Yes─▶│ NEW_Z_STATUS_LT_X = BUSY_RX │
                   └───────────────────────────┘      └─────────────────────────────┘
                              No
                              ▼
                   ┌───────────────────────────┐      ┌─────────────────────────────┐
                   │ PRE_Z_STATUS_LT_X = JAMMED ?├─Yes─▶│ NEW_Z_STATUS_LT_X = JAMMED  │
                   └───────────────────────────┘      └─────────────────────────────┘
                              No
                              ▼
                   ┌───────────────────────────┐      ┌─────────────────────────────┐
          No        │ PRE_Z_STATUS_LT_X = FREE ? ├─Yes─▶│ NEW_Z_STATUS_LT_X = FREE    │
                   └───────────────────────────┘      └─────────────────────────────┘
```

# FIG.6

EP 2 549 788 B1

```
                    No
                     ↓
┌──────────────────────────┐         ┌──────────────────────────┐         ┌──────────────────────────────────────┐
│ Z_STATUS_LT_Y = JAMMED ? │─Yes─→  │ PRE_Z_STATUS_LT_X = BUSY_TX ?│─Yes─→│ CONFLICT : Node X suspends transmitting │
└──────────────────────────┘         └──────────────────────────┘         │ in S_SLOT Z, with a random back-off     │
              │                                   │                        │ NEW_Z_STATUS_LT_X = FREE                │
              │                                  No                        └──────────────────────────────────────┘
              │                                   ↓
              │                       ┌──────────────────────────┐         ┌──────────────────────────────────┐
              │                       │ PRE_Z_STATUS_LT_X = BUSY_RX ?│─Yes─→│ NEW_Z_STATUS_LT_X = BUSY_RX      │
              │                       └──────────────────────────┘         └──────────────────────────────────┘
             No                                   │
              │                                  No
              │                                   ↓
              │                       ┌──────────────────────────┐         ┌──────────────────────────────────┐
              │                       │ PRE_Z_STATUS_LT_X = JAMMED ? │─Yes─→│ NEW_Z_STATUS_LT_X = JAMMED       │
              │                       └──────────────────────────┘         └──────────────────────────────────┘
              │                                   │
              │                                  No
              │                                   ↓
              │                       ┌──────────────────────────┐         ┌──────────────────────────────────┐
              │                       │ PRE_Z_STATUS_LT_X = FREE ?   │─Yes─→│ NEW_Z_STATUS_LT_X = FREE         │
              │                       └──────────────────────────┘         └──────────────────────────────────┘
              ↓
┌──────────────────────────┐         ┌──────────────────────────┐         ┌──────────────────────────────────┐
│ Z_STATUS_LT_Y = FREE ?   │─Yes─→  │ PRE_Z_STATUS_LT_X = BUSY_TX ?│─Yes─→│ NEW_Z_STATUS_LT_X = BUSY_TX      │
└──────────────────────────┘         └──────────────────────────┘         └──────────────────────────────────┘
                                                  │
                                                 No
                                                  ↓
                                      ┌──────────────────────────┐         ┌──────────────────────────────────┐
                                      │ PRE_Z_STATUS_LT_X = BUSY_RX ?│─Yes─→│ NEW_Z_STATUS_LT_X = BUSY_RX      │
                                      └──────────────────────────┘         └──────────────────────────────────┘
                                                  │
                                                 No
                                                  ↓
                                      ┌──────────────────────────┐         ┌──────────────────────────────────┐
                                      │ PRE_Z_STATUS_LT_X = JAMMED ? │─Yes─→│ NEW_Z_STATUS_LT_X = JAMMED       │
                                      └──────────────────────────┘         └──────────────────────────────────┘
                                                  │
                                                 No
                                                  ↓
                                      ┌──────────────────────────┐         ┌──────────────────────────────────┐
                                      │ PRE_Z_STATUS_LT_X = FREE ?   │─Yes─→│ NEW_Z_STATUS_LT_X = FREE         │
                                      └──────────────────────────┘         └──────────────────────────────────┘
```

Z_STATUS_LT_Y : Status of S-SLOT Z announced by a node Y in its local table.

PRE_Z_STATUS_LT_X : Previous status of S-SLOT Z in the local table of the local node (node X), before analysis of the local table transmitted by node Y.

**NEW_Z_STATUS_LT_X : New status of S-SLOT Z in the local table of the local node (node X), after analysis of the local table transmitted by node Y.**

Note: In this diagram the word « JAMMED » is used to designate « JAMMED_OR_IN_COLLISION ».

**FIG.6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 10290677 A

**Non-patent literature cited in the description**

• **LIPING ZHOU.** A hybrid MAC Protocol Based on ADAPT with Modified Bak-Off Mechanism. IEEE, 22 June 2010, V4-413